# EUROPEAN PATENT APPLICATION

(11) **EP 4 650 686 A1**
(43) Date of publication of application: **19.11.2025**
(21) Application number: 23891817.1
(22) Date of filing: 17.10.2023
(51) Int. Cl.: F25B 27/02, F25B 15/00, F25B 49/04, F25B 41/20, F24F 5/00

(54) **HIGH-EFFICIENCY INTEGRATED ABSORPTION COOLING SYSTEM USING FUEL CELL ARRANGEMENT**

(30) Priority: 17.11.2022 KR 20220154834
(71) Applicant: Samjungtech Co., Ltd, Seoul 05854 (KR); SK Ecoplant Co., Ltd., Seoul 03143 (KR)
(72) Inventor: WOO, Sung Min, Busan 49086 (KR); LEE, Su Yong, Changwon-si Gyeongsangnam-do 51590 (KR); KIM, Kyoung Young, Gimpo-si Gyeonggi-do 10102 (KR); SHIM, Yang Bae, Uiwang-si Gyeonggi-do 16036 (KR); YUN, Seokyoung, Gwangmyeong-si Gyeonggi-do 14272 (KR); KIM, Keun Wook, Seoul 04713 (KR); LEE, Ho June, Seoul 02741 (KR); KWON, Song Ee, Seoul 04731 (KR); LIM, In Mook, Seoul 08730 (KR); CHOI, Hyun Won, Seoul 02762 (KR)
(74) Representative: M. Zardi & Co S.A.
(86) International application number: PCT/KR2023/015462
(87) International publication number: WO 2024/106748

(57) **Abstract**

An absorption cooling system of the present invention includes: a fuel cell unit (100) for discharging an exhaust gas generated during power generation; and an absorption cooling unit (200) using the exhaust gas as a heat source. The absorption cooling unit (200) includes: an absorption freezer (10) receiving the exhaust gas as a heat source; an upper cooling tower (30) for lowering a temperature of cooling water of which the temperature has been increased due to the absorption freezer; a cooling water pump (40) for controlling flow of the cooling water; a cold water pump (50) for controlling flow of cold water which has been cooled by the absorption freezer; a system control unit (90) for controlling driving of the absorption cooling unit (200); a bypass valve (60) installed in a bypass pipe (12) and controlling external discharge of the exhaust gas provided from the fuel cell unit (100); an exhaust gas introduction valve (70) installed in an exhaust gas introduction pipe (13) and controlling supply of the exhaust gas to the absorption freezer (10); and an exhaust gas suction device (20) for providing a pressure to allow the exhaust gas to be provided to the absorption freezer (10).

## Description

### Field of the Invention

This invention relates to a double-effect absorption cooling system that utilizes relatively low-temperature exhaust gas generated during electricity production from a fuel cell as a heat source.

More particularly, it relates to an absorption cooling system that supplies exhaust gas generated from a fuel cell to the high-temperature generator (HTG) of a high-efficiency double-effect absorption chiller to use it as a heat source.

### Description of the Related Art

Globally, there is a trend of increasing medium to large-scale power generation fuel cell systems. Fuel cell systems are mainly used for power generation with phosphoric acid fuel cells (PAFC) and solid oxide fuel cells (SOFC). Meanwhile, for power generation fuel cell systems above a certain scale, electric chillers (such as air conditioners) are installed to alleviate the heat load of the electrical room where power is produced and converted.

For phosphoric acid fuel cells (PAFC), systems have been developed that use a single-effect absorption chiller to produce chilled water from exhaust heat generated as hot water at approximately 60~90 degrees Celsius. However, the low cooling coefficient of performance (COP) of about 0.7 when using exhaust heat is considered a disadvantage. Additionally, high power consumption due to the operation of chilled water and cooling water pumps for the absorption chiller, and the unavoidable white smoke generation from the cooling tower, have been identified as drawbacks.

In the case of solid oxide fuel cells (SOFC), exhaust gas at about 300~400 degrees Celsius is generated along with electricity, but the exhaust gas discharge pressure is very low at 10~50mmAq, and the exhaust gas temperature is not sufficient at 300~400 degrees Celsius, limiting the system integration with high-efficiency double-effect absorption chillers.

Cooling systems that can be applied to such medium to large-scale power generation fuel cell systems are increasingly in demand for cooling needs in data centers, smart farms, etc., which require both power load and cooling load and can be linked with power generation facilities. However, efficient cooling systems utilizing the exhaust heat of power generation fuel cells have not yet been developed.

### Detailed Descption of the Invention

### Technical Problem

To address the above-described problems, an object of the present invention is to provide a system for producing chilled water using a double-effect absorption chiller that utilizes relatively low-temperature (300 to 390°C) exhaust gas generated during power generation from a fuel cell as a heat source.

More specifically, the invention aims to provide a system capable of improving the overall efficiency of a fuel cell unit by recovering waste heat from exhaust gas generated by a solid oxide fuel cell (SOFC) and supplying it to the high-temperature generator (HTG) of a high-efficiency double-effect absorption chiller, thereby producing chilled water for use in cooling demands.

Additionally, another object of the present invention is to provide a cooling system capable of preventing white plume formation in the cooling tower under conditions of low ambient temperature and high relative humidity by introducing a portion of the exhaust gas discharged through the high-temperature generator into an anti-white smoke device before being released into the atmosphere.

### Solution to the Problem

The absorption cooling system of the present invention includes a fuel cell unit (100) that discharges exhaust gas generated during power generation and an absorption cooling unit (200) that utilizes the exhaust gas as a heat source. The absorption cooling unit (200) includes an absorption chiller (10) that receives the exhaust gas as a heat source; an upper cooling tower (30) that lowers the temperature of the cooling water heated by the absorption chiller; a cooling water pump (40) that controls the flow of cooling water; a chilled water pump (50) that controls the flow of chilled water cooled by the absorption chiller; a system control unit (90) that controls the operation of the absorption cooling unit (200); a bypass valve (60) installed in the bypass pipe (12) that controls the external discharge of the exhaust gas supplied from the fuel cell unit (100); an exhaust gas introduction valve (70) installed in the exhaust gas introduction pipe (13) that controls the supply of the exhaust gas to the absorption chiller (10); and an exhaust gas intake device (20) that provides pressure so that the exhaust gas can be supplied to the absorption chiller (10).

In one embodiment, the absorption chiller (10) is a double-effect absorption chiller including a high-temperature generator (HTG), and the high-temperature generator (HTG) includes a regenerator exhaust gas pipe (16) through which the exhaust gas supplied from the fuel cell unit (100) moves, and the exhaust gas intake device (20) is installed at the rear end of the regenerator exhaust gas pipe (16).

In one embodiment, the system further includes an exhaust gas discharge pipe (14) that discharges the exhaust gas emitted from the exhaust gas intake device (20) externally; an anti-white smoke inlet pipe (15) connected to the exhaust gas discharge pipe (14) delivering the exhaust gas to the upper cooling tower (30); and a cooling tower introduction valve (80) controlling the anti-white smoke inlet pipe (15).

In one embodiment, the bypass valve (60) is controlled by the system control unit (90) to maintain the exhaust backpressure within a specified range in the fuel cell unit (100) when the absorption cooling unit (200) is driven for cooling, and the opening rate is controlled depending on the cooling operation conditions of the absorption cooling unit (200).

In one embodiment, the cooling operation conditions of the absorption cooling unit (200) include an operation degree of the exhaust gas intake device (20), an opening rate of the exhaust gas introduction valve (70), an operation degree of the cooling water pump (40), and an operation degree of the chilled water pump (50).

In one embodiment, when the absorption cooling system is at maximum load (S320), by the system control unit (90), the exhaust gas introduction valve (70) is opened to the maximum extent, the exhaust gas intake device (20) is driven within the set high load operation Hz range, and the opening rate of the bypass valve (60) is adjusted to maintain the exhaust backpressure within a specified range in the fuel cell unit (100).

In one embodiment, when the absorption cooling system is at partial load (S330), according to the cooling load of the absorption chiller (10), the operation degree of the exhaust gas intake device (20) is adjusted by the system control unit (90), and the opening rate of the bypass valve (60) is adjusted to maintain the exhaust backpressure within a specified range in the fuel cell unit (100).

In one embodiment, the absorption chiller (10) further includes an exhaust gas input temperature sensor (S1); an exhaust gas output temperature sensor (S2); and a high-temperature generator temperature sensor (S3), and when the absorption chiller (10) is determined to be in an over-concentration state, the bypass valve (60) is fully opened, the exhaust gas introduction valve (70) is fully closed, and the exhaust gas intake device (20) is stopped, and these states are maintained until the current chilled water outlet temperature of the absorption chiller (10) rises above the freeze prevention release temperature.

In one embodiment, the upper cooling tower (30) includes a fan (31), a cooling water sprinkling device (33) spraying the cooling water, packing material (34), and an anti-white smoke device (32), and the anti-white smoke device (32) receives the exhaust gas from the anti-white smoke inlet pipe (15) controlled by the cooling tower introduction valve (80) when conditions for white smoke occurrence are detected in the upper cooling tower (30) and supplies the exhaust gas into the cooling tower (30) to prevent the white smoke phenomenon.

In one embodiment, the anti-white smoke device (32) is located at the lower part of the upper cooling tower (30) and supplies the exhaust gas from the lower to the upper direction into the packing material (34).

### Effects of the Invention

According to the present invention, it is possible to utilize exhaust gas having a temperature of approximately 300 to 400°C and discharged from a fuel cell at a relatively low pressure (10 to 50 mmAq) as a cooling heat source for a high-efficiency double-effect absorption chiller. As a result, the invention provides a fuel cell-based absorption cooling system capable of achieving high-efficiency cooling with a COP of 1.1 to 1.4 or higher.

In addition, when the outside air is cold and humid, white plume (i.e., condensation of moisture in saturated air) may occur in the cooling tower due to exhaust discharged into the atmosphere. The present invention prevents such white plume formation by introducing part of the low-temperature (80 to 150°C) exhaust gas-already used as a cooling heat source in the double-effect absorption chiller-into an anti-white smoke device in the cooling tower, thereby preventing freezing of surrounding facilities caused by white plume during the winter season.

### Brief Description of the Drawings

FIG. 1 is a configuration diagram of a high-efficiency integrated absorption cooling system utilizing exhaust heat from a fuel cell according to the present invention.
FIG. 2 is a configuration diagram showing a part of the absorption cooling system according to the embodiment of FIG. 1.
FIG. 3a to FIG. 3c are flowcharts showing the operation of the absorption cooling system according to the embodiment of FIG. 1.
FIG. 4a is a configuration diagram showing the cooling tower of the absorption cooling system according to the embodiment of FIG. 1.
FIG. 4b is a configuration diagram showing the cooling tower of the absorption cooling system according to another embodiment of the present invention.

### Detailed Description of the Invention

Hereinafter, preferred embodiments will be described with reference to the accompanying drawings. In this process, the thickness of lines or the size of components shown in the drawings may be exaggerated for clarity and convenience of explanation. Also, the terms described below are defined in consideration of the functions in the present invention, and may vary according to the user's or operator's intention or custom. Therefore, the definitions of these terms should be made based on the entire content of this specification.

In this specification, a module may refer to a functional and structural combination of hardware for performing the technical idea of the present invention and software for driving the hardware. For example, the module may refer to a logical unit of predetermined code and hardware resources for executing the predetermined code, and it is not necessarily meant to refer to physically connected code or a single type of hardware, which can be easily inferred by an average expert in the technical field of the present invention.

Also, when it is mentioned that a component is "connected" or "connected" to another component, it should be understood that it may be directly connected or connected to the other component, but other components may exist in between. On the other hand, when it is mentioned that a component is "directly connected" or "directly connected" to another component, it should be understood that no other components exist in between.

The singular expression includes the plural expression unless the context clearly indicates otherwise. Also, throughout this specification, when a part is said to "include" a component, it means that it may include other components in addition to the component, unless specifically stated otherwise. It is apparent to those skilled in the art that the present invention can be embodied in other specific forms without departing from the essential characteristics of the present invention.

In addition, the following embodiments are presented as examples and are not intended to limit the scope of the present invention, and various embodiments may be implemented through the technical idea of the present invention. Hereinafter, embodiments of the present invention will be described in detail with reference to the drawings. The same reference numerals in the drawings refer to the same elements.

### Configuration of the Cooling System

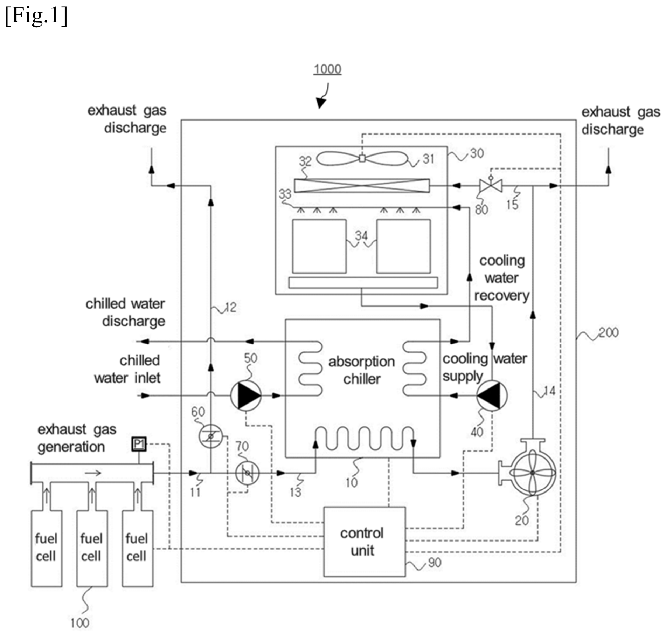

FIG. 1 is a configuration diagram of a high-efficiency integrated absorption cooling system utilizing exhaust heat from a fuel cell according to the present invention.

Referring to FIG. 1, the high-efficiency integrated absorption cooling system (1000) utilizing fuel cell exhaust heat includes a fuel cell unit (100) and an absorption cooling unit (200).

The fuel cell unit (100) may use a solid oxide fuel cell (SOFC), with the primary purpose of generating electricity, but it also produces exhaust gas at approximately 300~400 degrees Celsius simultaneously with electricity generation. The absorption cooling unit (200) utilizes the exhaust gas emitted from the fuel cell for cooling purposes. The exhaust gas emitted from the fuel cell does not meet the normal operating range of temperature or pressure compared to the heat source applied to conventional absorption chillers, thus requiring additional devices compared to conventional absorption chillers.

The absorption cooling unit (200) includes an absorption chiller (10), an exhaust gas intake device (20), and an upper cooling tower (30), as well as a cooling water pump (40), a chilled water pump (50), a bypass valve (60), an exhaust gas introduction valve (70), a cooling tower introduction valve (80), and a system control unit (90).

The absorption chiller (10) may be a high-efficiency double-effect absorption chiller. In addition to the absorption chiller (10), the absorption cooling unit (200) includes a cooling water pump (40) that supplies cooling water applied to a typical absorption chiller (10), a chilled water pump (50) that introduces and discharges chilled water, an upper cooling tower (30) that cools the cooling water, and a system control unit (90) that drives/controls various pumps, valves, and devices.

In particular, to apply the exhaust gas generated from the fuel cell to the absorption chiller (10), an exhaust gas intake device (20) is included. Additionally, to control the incoming exhaust gas, a bypass valve (60) and an exhaust gas introduction valve (70) are installed. The bypass valve (60) and the exhaust gas introduction valve (70) can be configured as a single three-way valve.

The exhaust gas intake device (20) is installed at the rear end of the regenerator exhaust gas pipe (16) to be described later, and it adjusts the intake pressure of the exhaust gas, providing not only the pressure at which the exhaust gas is supplied to the absorption chiller (10) but also the pressure for external discharge and the supply pressure for the cooling tower (30) to prevent white smoke.

The exhaust gas at approximately 300~400 degrees Celsius generated simultaneously with electricity production in the fuel cell unit (100) is supplied to the high-temperature generator (HTG) of the absorption chiller (10) through the exhaust gas introduction pipe (11). The supplied exhaust gas can be discharged externally through the bypass pipe (12) controlled by the bypass valve (60), and at the same time, it is provided to the absorption chiller (10) through the exhaust gas introduction pipe (13) controlled by the exhaust gas introduction valve (70). If the absorption chiller (10) is a high-efficiency double-effect absorption chiller, it is provided to the high-temperature generator (HTG), and the exhaust gas heat can be transferred to the high-temperature generator (HTG) through the regenerator exhaust gas pipe (16) within the high-temperature generator.

At this time, to control the exhaust backpressure of the exhaust gas supplied to the absorption chiller (10), an exhaust gas intake device (20) is provided, and the exhaust gas intake device (20) is discharged externally through the exhaust gas discharge pipe (14). The exhaust gas discharge pipe (14) is provided to the anti-white smoke device (32) of the upper cooling tower (30) for white smoke prevention through the anti-white smoke inlet pipe (15) controlled by the cooling tower introduction valve (80).

The cooling water pump (40), chilled water pump (50), as well as the bypass valve (60), exhaust gas introduction valve (70), cooling tower introduction valve (80), exhaust gas intake device (20), and cooling fan (31) are controlled by the system control unit (90).

As explained the above, the exhaust backpressure of the exhaust gas generated from the fuel cell is typically at a very low level of 10~50mmAq, so it is not naturally supplied to the absorption chiller. However, the exhaust gas intake device (20), a feature of this invention, allows the application of exhaust gas to the absorption chiller, and the exhaust gas intake device (20) induces the optimal exhaust gas input amount through rotational speed control.

If the exhaust gas intake pressure in the exhaust gas intake device operates excessively, the pressure of the fuel cell stack may decrease, and the power generation efficiency may decline, making the maintenance of the fuel cell's exhaust backpressure a very important part.

The exhaust gas flow rate is determined by the power generation load of the fuel cell, but it does not match the flow rate required by the absorption chiller. Therefore, the absorption chiller reads the set target chilled water outlet temperature and the current chilled water inlet/outlet temperature to detect the cooling load and controls the introduction of the corresponding amount of exhaust gas.

The optimal exhaust gas input amount applied at this time can be implemented through inverter control in the system control unit (90) by detecting the required cooling load and the power generation load of the fuel cell unit (100). The control means utilize the inverter rotational speed control of the intake device (20) and the bypass valve (60) and exhaust gas introduction valve (70).

### Operation of the Cooling System

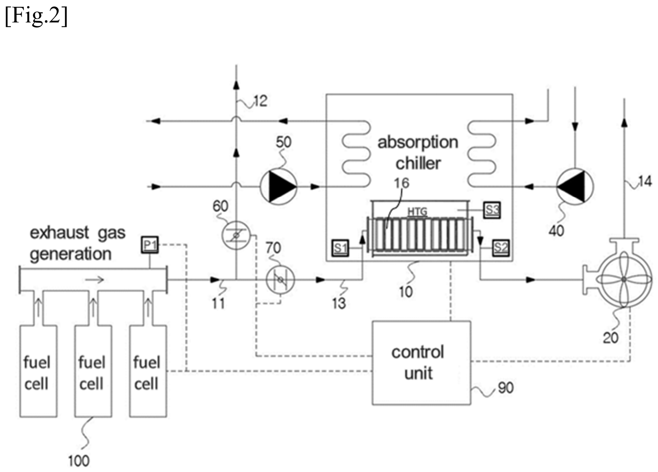

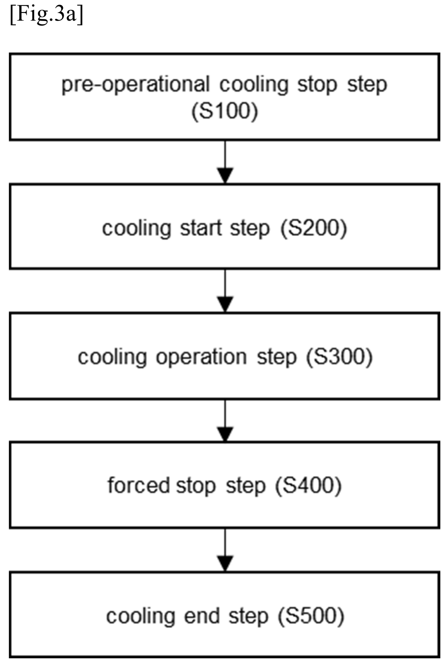

FIG. 2 is a configuration diagram showing a part of the absorption cooling system according to the embodiment of FIG. 1. FIG. 3a to FIG. 3c are flowcharts showing the operation of the absorption cooling system according to the embodiment of FIG. 1.

Referring to FIG. 3a, the operation of the absorption cooling system according to this embodiment includes a pre-operational cooling stop step (S100), a cooling start step (S200), a cooling operation step (S300), a forced stop step (S400) and a cooling end step (S500). In the pre-operational cooling stop step (S100), the fuel cell unit (100) is operational, but the absorption cooling unit (200) is not operational. The absorption cooling unit (200) begins initial operation in the cooling start step (S200). The absorption cooling unit (200) operates according to the state of the exhaust gas and the required cooling load in the cooling operation step (S300). The operation is stopped according to conditions set for equipment protection in the forced stop step (S400). The cooling is terminated in the cooling end step (S500).

First, the cooling stop step (S100) is a step where the absorption cooling unit (200) is not operational. In this step, to prevent the use of exhaust gas for cooling operation, the bypass valve (60) is fully opened, and the exhaust gas introduction valve (70) is fully closed. Additionally, the exhaust gas intake device (20) remains in a stopped state. All exhaust gas generated from the fuel cell unit (100) is discharged externally.

In the cooling start step (S200), the absorption chiller (10) of the absorption cooling unit (200) is started. In the cooling start step of the present embodiment, the exhaust gas introduction valve (70) is fully opened, and the exhaust gas intake device (20) is operated at maximum load.

In the cooling operation step (S300), operation is controlled in different ways depending on the operating environment. This is due to the characteristic of controlling the operation of the absorption chiller by the exhaust gas of the fuel cell. The specific steps are as follows, and this does not mean that each step must proceed sequentially according to the operating conditions.

The bypass valve control operation step (S310) controls the current exhaust backpressure value (P1_pv) to satisfy the required target exhaust backpressure value (P1_cv), and this must proceed while maintaining the normal power generation efficiency (G-normal) of the fuel cell unit (100). Therefore, to adjust the required current exhaust backpressure value (P1_pv), the opening rate of the bypass valve (60) is adjusted depending on other operating conditions. The first constraint for the operation of the absorption cooling unit (200) is that it should not affect the power production of the fuel cell unit (100), and excessive intake of exhaust gas can affect power production, so to prevent this, the function of adjusting the bypass valve (60) to reach the target exhaust backpressure value (P1_cv) is essentially added. The bypass valve control operation step (S310) proceeds in parallel with the operation of the following three steps.

In the maximum load operation step (S320), operation proceeds under the condition that the current chilled water outlet temperature (T_pv) is greater than the target chilled water temperature (T_cv) applied with the high load judgment band (T_band_H). The rated output of the fuel cell must be maintained, and operation is conducted under the condition of maximizing the cooling load. At this time, the exhaust gas introduction valve (70) is fully opened (S321), and simultaneously, the bypass valve (60) is closed to nearly 0, and the exhaust gas intake device (20) is operated at the maximum allowable value within the set high load operation Hz range (S322). Even at this time, the fuel cell power generation efficiency (G_normal) and the current exhaust backpressure value (P1_pv) are detected and adjusted, and rated cooling operation is conducted.

The partial load operation step (S330) is when the load of the fuel cell unit (100) is operated at rated load, but the cooling load is at partial load. It corresponds to the case where the current chilled water outlet temperature (T_pv) is less than the target chilled water temperature (T_cv) applied with the high load judgment band (T_band_H) and greater than the target chilled water temperature (T_cv) applied with the low load judgment band (T_band_L). At this time, the cooling load is read from the absorption chiller (10) to adjust the amount of exhaust gas. Primarily, the output of the exhaust gas intake device (20) is adjusted, and the bypass valve (60) is adjusted based on the power generation efficiency (G_normal) of the fuel cell and the exhaust gas pressure (P1_pv) to minimize cooling load adjustment and power consumption of the exhaust gas intake device (20).

The minimum load operation step (S340) is when the cooling load is operated at minimum load, and in this case, the exhaust gas intake device (20) is stopped or operated at minimum Hz, and the minimum load is maintained through the control of the exhaust gas introduction valve (70).

The forced stop step (S400) is a step to prevent over-concentration of the absorption chiller. It occurs when the current chilled water outlet temperature (T_pv) falls below the freezing prevention temperature (T_limit_L) (S410). The over-concentration state of the absorption chiller is detected by sensing the high-temperature generator sensor (S3) and the exhaust gas temperature sensors (S1, S2). At this time, since over-concentration may occur, the chiller is forcibly stopped (S420). The bypass valve (60) is fully opened, the exhaust gas introduction valve (70) is closed, and the exhaust gas intake device (20) is stopped. In some cases, if the concentration exceeds the standard value, the exhaust gas introduction valve (70) can be urgently closed to protect the equipment. The forced stop state is maintained until the current chilled water outlet temperature (T_pv) rises above the freeze prevention release temperature (T_limit_H) (S430).

In the cooling end step (S500), cooling is terminated, and the operating conditions are the same as in the cooling stop step (S100). In this step, to prevent the use of exhaust gas for cooling operation, the bypass valve (60) is fully opened, and the exhaust gas introduction valve (70) is fully closed. Additionally, the exhaust gas intake device (20) remains in a stopped state. All exhaust gas generated from the fuel cell unit (100) is discharged externally.

### Anti-White Smoke Function

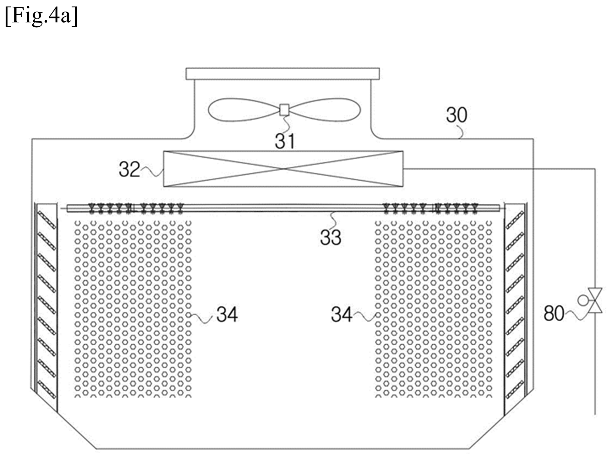

FIG. 4a is a configuration diagram of the cooling tower of the absorption cooling system according to the embodiment of FIG. 1.

Referring to FIG. 4a, the upper cooling tower (30) of the absorption cooling system in the present embodiment includes an anti-white smoke device (32) to prevent white smoke that occurs when the outside air is cold and humid. The upper cooling tower (30) in the present embodiment includes packing material (34), a cooling water sprinkling device (33), and a cooling tower fan (31), in addition to the anti-white smoke device (32) utilizing exhaust gas and a cooling tower introduction valve (80).

The upper cooling tower (30) functions to dissipate the heated cooling water of the absorption chiller, which operates when a cooling load occurs, into the atmosphere to lower the cooling water temperature. The anti-white smoke device (32) automatically introduces part of the exhaust gas, which is generated by the fuel cell, supplied to the absorption chiller, used, and discharged at about 80~150 degrees Celsius, into the anti-white smoke device (32) through the cooling tower introduction valve (80) when conditions for white smoke occurrence are detected in the upper cooling tower (30). The introduced portion of the exhaust gas enters through coils or multiple open holes at the top of the coils inside the anti-white smoke device (32), passing through the packing material (34) and exchanging heat or mixing with saturated air. As a result, the temperature of the saturated air rises, and the relative humidity decreases, preventing the white smoke phenomenon.

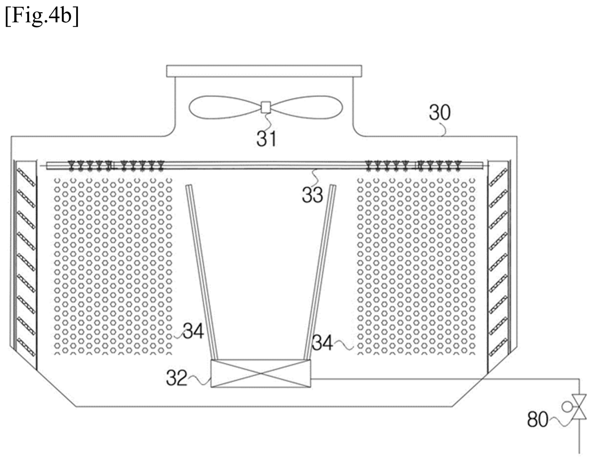

FIG. 4b is a configuration diagram of the cooling tower of the absorption cooling system according to another embodiment of the present invention.

Referring to FIG. 4b, the anti-white smoke device (32) is installed at the lower part of the upper cooling tower (30) and the coil is installed in the direction of the packing material (34) so that the saturated air passing through the packing material (34) passes through the anti-white smoke coil (35), is heated, and the relative humidity is lowered, preventing the white smoke phenomenon. Additionally, a hole is formed at the top of the coil section, allowing the exhaust gas to be discharged to the top of the coil and finally mixed with the heated air, further preventing white smoke.

Also, in FIG. 4a and FIG. 4b, the cooling tower introduction valve (80) can adjust the amount of exhaust gas under white smoke occurrence conditions, and a drain pipe (not shown) can be additionally installed to discharge condensate of exhaust gas in the coil to the outside.

As described above, although the embodiments have been explained with limited diagrams, those skilled in the art can apply various technical modifications and variations based on the above. For example, the described technologies can be performed in a different order than described, and/or the components of the described systems, structures, devices, circuits, etc., can be combined or combined in a different form than described, or replaced or substituted by other components or equivalents, achieving appropriate results. Therefore, other implementations, other embodiments, and equivalents to the claims below are also within the scope of the claims.

### Industrial Applicability

According to the present invention, exhaust gas having a temperature of approximately 300 to 400°C and discharged from a fuel cell at a relatively low pressure (10 to 50 mmAq) can be effectively utilized as a cooling heat source in a high-efficiency double-effect absorption chiller. This enables the implementation of a fuel cell-based absorption cooling system capable of achieving a high cooling efficiency with a coefficient of performance (COP) of 1.1 to 1.4 or higher.

Furthermore, when the ambient air is cold and humid, a white plume phenomenon (i.e., condensation of moisture in saturated air) may occur in the cooling tower. The present invention prevents such white plume formation by introducing a portion of the low-temperature (80 to 150°C) exhaust gas-already used as a heat source for the absorption chiller and discharged into the atmosphere-into an anti-white smoke device in the cooling tower. This also helps prevent the freezing of nearby facilities during winter caused by the white plume.

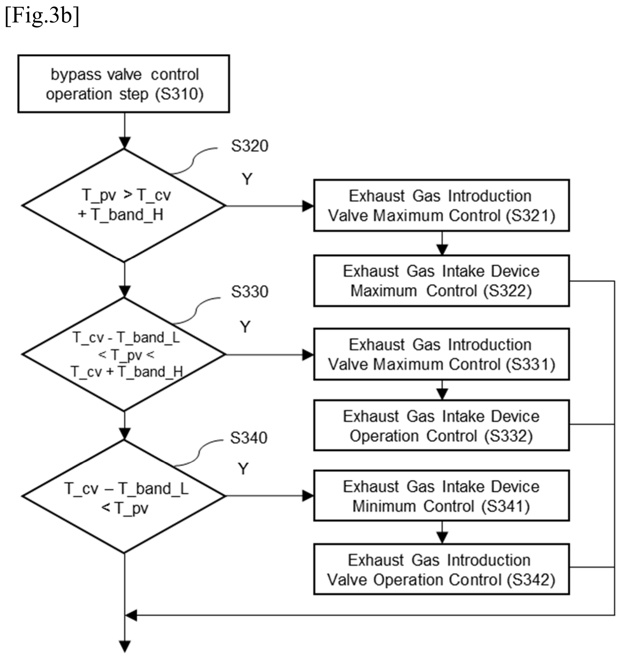

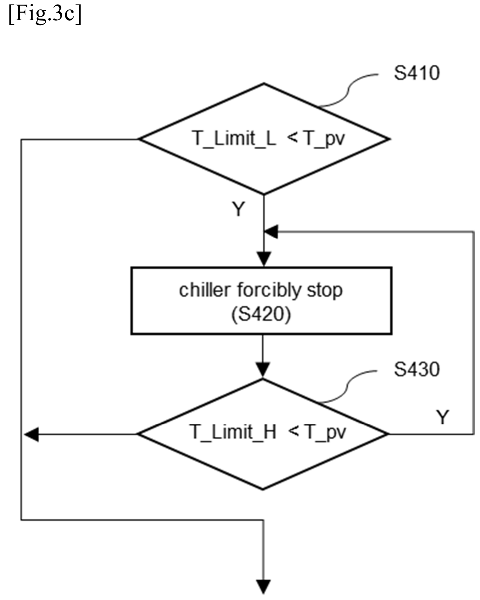

Description of FIG. 3C is provided together with FIGS. 3A and 3B.

## Claims

1. An absorption Cooling System comprising:
a fuel cell unit (100) discharging exhaust gas generated during power generation and an absorption cooling unit (200) utilizing the exhaust gas as a heat source,
wherein the absorption cooling unit (200) includes:
an absorption chiller (10) receiving the exhaust gas as a heat source;
an upper cooling tower (30) lowering a temperature of cooling water heated by the absorption chiller;
a cooling water pump (40) controlling a flow of the cooling water;
a chilled water pump (50) controlling a flow of chilled water cooled by the absorption chiller;
a system control unit (90) controlling the operation of the absorption cooling unit (200);
a bypass valve (60) installed in a bypass pipe (12) controlling external discharge of the exhaust gas supplied from the fuel cell unit (100);
an exhaust gas introduction valve (70) installed in an exhaust gas introduction pipe (13) controlling supply of the exhaust gas to the absorption chiller (10); and
an exhaust gas intake device (20) providing pressure in order to supply the exhaust gas to the absorption chiller (10).

2. The absorption Cooling System of claim 1,
wherein the absorption chiller (10) is a double-effect absorption chiller including a high-temperature generator (HTG),
wherein the high-temperature generator (HTG) includes a regenerator exhaust gas pipe (16) through which the exhaust gas supplied from the fuel cell unit (100) moves,
wherein the exhaust gas intake device (20) is installed at rear end of the regenerator exhaust gas pipe (16).

3. The absorption Cooling System of claim 1, further comprising:
an exhaust gas discharge pipe (14) discharging the exhaust gas emitted from the exhaust gas intake device (20) externally;
an anti-white smoke inlet pipe (15) connected to the exhaust gas discharge pipe (14) delivering the exhaust gas to the upper cooling tower (30); and
a cooling tower introduction valve (80) controlling the anti-white smoke inlet pipe (15).

4. The absorption Cooling System of claim 1,
wherein the opening rate of the bypass valve (60) is controlled depending on cooling operation conditions of the absorption cooling unit (200) by the system control unit (90),
in order to maintain exhaust backpressure within a specified range in the fuel cell unit (100) when the absorption cooling unit (200) is driven for cooling.

5. The absorption Cooling System of claim 4,
wherein a cooling operation conditions of the absorption cooling unit (200) include an operation degree of the exhaust gas intake device (20), an opening rate of the exhaust gas introduction valve (70), an operation degree of the cooling water pump (40), and an operation degree of the chilled water pump (50).

6. The absorption Cooling System of claim 4,
wherein, when the absorption cooling system is at maximum load (S320), by the system control unit (90),
the exhaust gas introduction valve (70) is opened to the maximum extent,
the exhaust gas intake device (20) is driven within the set high load operation Hz range, and
the opening rate of the bypass valve (60) is adjusted to maintain the exhaust backpressure within a specified range in the fuel cell unit (100).

7. The absorption Cooling System of claim 4,
wherein, when the absorption cooling system is at partial load (S330), by the system control unit (90) according to the cooling load of the absorption chiller (10),
an operation degree of the exhaust gas intake device (20) is adjusted, and
the opening rate of the bypass valve (60) is adjusted to maintain the exhaust backpressure within a specified range in the fuel cell unit (100).

8. The absorption Cooling System of claim 1,
wherein the absorption chiller (10) further includes an exhaust gas input temperature sensor (S1); an exhaust gas output temperature sensor (S2); and a high-temperature generator temperature sensor (S3),
wherein when the absorption chiller (10) is determined to be in an over-concentration state,
the bypass valve (60) is fully opened, the exhaust gas introduction valve (70) is fully closed, and the exhaust gas intake device (20) is stopped,
states of the bypass valve (60), the exhaust gas introduction valve (70), and the exhaust gas intake device (20) are maintained until the current chilled water outlet temperature of the absorption chiller (10) rises above the freeze prevention release temperature.

9. The absorption Cooling System of claim 3,
wherein the upper cooling tower (30) includes a fan (31), a cooling water sprinkling device (33) spraying the cooling water, packing material (34), and an anti-white smoke device (32),
wherein the anti-white smoke device (32) receives the exhaust gas from the anti-white smoke inlet pipe (15) controlled by the cooling tower introduction valve (80) when conditions for white smoke occurrence are detected in the upper cooling tower (30) and supplies the exhaust gas into the cooling tower (30) to prevent the white smoke phenomenon,

10. The absorption Cooling System of claim 9,
wherein the anti-white smoke device (32) is located at the lower part of the upper cooling tower (30) and
supplies the exhaust gas from the lower to the upper direction into the packing material (34).
